Europäisches Patentamt

European Patent Office

Office européen des brevets

(19)

(11) Veröffentlichungsnummer: **0 081 219**

**A2**

(12) # EUROPÄISCHE PATENTANMELDUNG

(21) Anmeldenummer: **82111240.6**

(22) Anmeldetag: **04.12.82**

(51) Int. Cl.³: **G 01 J 5/04**
**C 10 B 21/10**

(30) Priorität: **07.12.81 DE 3148314**

(43) Veröffentlichungstag der Anmeldung:
**15.06.83 Patentblatt 83/24**

(84) Benannte Vertragsstaaten:
**FR GB IT NL**

(71) Anmelder: **Dr. C. Otto & Comp. Gesellschaft mit beschränkter Haftung**
**Christstrasse 9**
**D-4630 Bochum 1(DE)**

(72) Erfinder: **Stewen, Wilhelm, Dr. Ing.**
**Gibbenhey 8**
**D-4600 Dortmund 50(DE)**

(74) Vertreter: **Radt, Finkener, Ernesti Patentanwälte**
**Heinrich-König-Strasse 119**
**D-4630 Bochum 1(DE)**

(54) **Vorrichtung zur Temperaturmessung von Koksofenkammerwänden.**

(57) Zur Kontrolle und Steuerung der Beheizung von Koksöfen wird die Anordnung von Temperaturmeßgeräten am Druckkopf der zu Koksöfen gehörenden Druckstangen vorgeschlagen, wobei der Temperturmeßwert im Meßkopf in ein elektrisches Signal umgewandelt und nach Übermittlung in ein außenstehendes Aufzeichnungs- und/oder Auswertungsgerät aufgezeichnet wird.

FIG. 1

EP 0 081 219 A2

Croydon Printing Company Ltd

Radt, Finkener, Ernesti
Patentanwälte
Heinrich-König-Straße 119
4630 Bochum 1
Fernsprecher (0234) 477 27/28
Telegrammadresse: Radtpatent Bochum
Telex: 825769 radt d

- 1 -

82 904
EEF/US

Vorrichtung zur Temperaturmessung von Koksofenkammerwänden

Die Erfindung betrifft eine Vorrichtung zur Temperaturmessung von Koksofenkammerwänden. Die Temperatur der Koksofenkammerwände bestimmt den Verkokungsvorgang. Die Koksofenkammerwände werden über benachbarte Heizwände aufgeheizt, wobei die großen Flächen der Kammerwände so beheizt werden müssen, daß ein gleichmäßig ausgegarter Koks anfällt. Gleichmäßig ausgegarter Koks hat überall den gleichen Restgehalt an flüchtigen Bestandteilen. Voraussetzung dafür ist, daß jeder Stelle der Kammerwand die dem Wärmebedarf dieser Stelle entsprechende Wärmemenge durch die Verbrennung der Heizgase zugeführt wird. Die Heizgase werden in der Heizwand durch Heizzüge in senkrechter Richtung von unten nach oben geführt und verbrennen zum Teil in unterschiedlicher Höhe des Heizzuges unter Luftüberschuß. Durch die Unterteilung der Heizwände in eine große Zahl von Heizzügen wird erreicht, daß die großen Gasmengen geregelt und über die ganze Heizwand richtig verteilt geführt werden. Die Heizzüge dienen dazu, die zuzuführenden Wärmemengen in der Längsrichtung der Heizwand entsprechend dem infolge der Konizität der Ofenkammern zur Koksseite hinsteigenden Wärmebedarf zu dosieren (horizontale Verteilung). Wichtig ist außerdem, daß in jedem Heizzug in senkrechter Richtung die Wärmeintensität gleichmäßig verteilt ist.

Weitere wesentliche Maßnahmen zur Sicherstellung einer gleichmäßigen Beheizung ergeben sich aus der Art des für die Beheizung verwendeten Brennstoffes. Schwachgasflammen, die lang und nicht leuchtend sind, fördern eine gleich-

- 2 -

mäßige Beheizung. Starkgas hat dagegen eine kurze leuchtende Flamme, so daß die Wärmeverteilung ungleichmäßig wird.
Die Beheizung mit Starkgas erfordert daher verschiedene
Maßnahmen zur Vergleichmäßigung der Beheizung. Dazu gehören
unter anderem eine Verteilung der Gasdüsen in den einzelnen
Zügen auf verschiedene Höhen, Zumischung inerter Gase (Abgase) zu den Verbrennungsgasen oder stufenweise Zuführung
der Verbrennungsluft. Ferner bedingen die verschiedenartigen Zuführungen der bekannten Koksofenbauarten eine Anzahl
besonderer Maßnahmen zur gleichmäßigen Beheizung; z.B.
wird das Heizgas bei kopfbeheizten Öfen aus Sammelleitungen zugeführt, die an der Vorderseite der Öfen, den Ofenköpfen, verlaufen. Starkgas fließt in Verteilungskanäle,
die zwischen der Ofenkammer und dem dazugehörigen Regenerator liegen, und verteilt sich von hier auf die einzelnen
Heizzüge. Die für jeden Heizzug erforderliche Gasmenge
wird durch kalibrierte Steindüsen in der Brennerebene eingestellt.

Andere Besonderheiten ergeben sich bei Koksöfen mit z.B.
Zwillingszugsystemen oder sogenannten Gruppenzugöfen.

Bei allen Koksöfen erfolgt die Beheizungskontrolle in der
Regel durch die Messung der Düsensteintemperatur in den
Heizzügen der Heizwand, also auf der der Einsatzkohle abgewandten Seite der Kammerwand. Diese Messung erfolgt mit
Pyrometer durch Bedienungsleute und ist einerseits durch
einen erheblichen Arbeitsaufwand und andererseits durch
eine relativ große Unschärfe bezüglich der gleichmäßigen
Beheizung geprägt. Die Unschärfe resultiert aus dem Abstand der Temperaturmeßstelle von der mit der Kohle in
Berührung kommenden Kammerwandfläche. Die gleichmäßige
Temperatur dieser Kammerwandfläche, insbesondere auf der
der Einsatzkohle zugewandten Seite, ist jedoch für die
gleichmäßige Ausgarung des Kokses maßgebend. In relativ
großen Abständen wird deshalb auch die Temperatur an die-

- 3 -

sen Kammerwandflächen gemessen. Das geschieht durch die Füllöcher gleichfalls mit Pyrometer, beeinträchtigt den Ofenbetrieb jedoch in ganz erheblichem Maße.

Der Erfindung liegt daher die Aufgabe zugrunde, eine Vorrichtung zu schaffen, mit der sich eine Beheizungskontrolle der Kammerwände mit möglichst geringem personellem Aufwand und großer Genauigkeit mit jeder Manipulation des Ofens gekoppelt auf der der Einsatzkohle zugewandten Seite durchführen läßt.

Nach einem älteren Vorschlag gemäß der DE-OS 30 45 508 wird das durch mindestens ein Pyrometer mit vorgeschalteter, an der Druckstange befestigter Optik erreicht. Mit der Druckstange wird der ausgegarte Koks einer jeden Ofenkammer aus der Ofenkammer herausgedrückt. Dabei bewegt die Druckstange einen den Koks vor sich herschiebenden Schild durch die Ofenkammer und wird durch die ganze Ofenkammer hindurchbewegt. Die erfindungsgemäße Befestigung der dem Pyrometer vorgeschalteten Optik an der Druckstange bewirkt, daß die Optik sich gemeinsam mit der Druckstange durch die Ofenkammer bewegt. Auf diesem Wege erfaßt die Optik die gesamte Breite einer Kammerwandfläche. Zweckmäßigerweise ist die Optik dazu senkrecht zur Kammerwand montiert, d.h. quer zur Druckstangenlängsachse.

Vorzugsweise wird mittels verschiedener Pyrometer und vorgeschalteter Optiken zugleich die Temperatur an beiden einander gegenüberliegenden Ofenkammerwandflächen gemessen. Das geschieht dann mit ortsfest installierten Optiken. Wahlweise kann jedoch auch eine bewegliche Optik eingesetzt werden, die in Intervallen gegen jede der gegenüberliegenden Ofenkammerwandflächen geschwenkt wird und nach jedem Schwenkvorgang eine Temperaturmessung erlaubt. Dadurch entstehen Temperaturmeßstellen an jeder Ofenkammerwand, die entsprechend dem Schwenkvorgang einen Abstand voneinander

- 4 -

aufweisen. Nach dem älteren Vorschlag ist der Schwenkvorgang so gewählt, daß der Abstand zwischen zwei benachbarten Temperaturmeßstellen an einer Ofenkammerwandfläche das Maß der Teilung der Heizzüge der zugehörigen Heizwand nicht überschreitet.

In einer weiteren bevorzugten Ausgestaltung des älteren Vorschlages sind für jede Ofenkammerwandfläche jeweils zwei Pyrometermeßstellen mit zugehöriger Optik annähernd in einem Abstand an der Druckstange befestigt, der gleich der Höhe des Kohlebesatzes ist, so daß die Temperatur am oberen und unteren Ende der Ofenkammerwandfläche gemessen wird. Das ist vor allem für Koksöfen mit senkrecht von unten nach oben durch die Heizzüge geführten Heizgasen vorgesehen, um einen unerwünschten Temperaturabfall in vertikaler Richtung an den Ofenkammerwandflächen zu messen.

Wahlweise ist anstelle der beiden für jede Ofenkammerwandfläche vorgesehenen ortsfesten Pyrometer auch ein in vertikaler Richtung mit der Optik bewegbares Pyrometer vorgesehen oder es treten zusätzlich zu den beiden für jede Ofenkammerwandfläche vorgesehenen ortsfesten Pyrometern noch weitere Pyrometermeßstellen mit Optik hinzu. Die in vertikaler Richtung bewegliche Optik ermöglicht beliebig viele Meßpunkte in vertikaler Richtung. Desgleichen lassen sich eine Vielzahl gewünschter Meßpunkte in vertikaler Richtung mit einer entsprechenden Vielzahl ortsfester Optiken erzielen.

Die Optik soll nach dem älteren Vorschlag aus einem von einem Kühlmantel umschlossenen Lichtleiterkabel mit vorgeschaltetem Quarzfenster bestehen. Das Quarzfenster ist bereits von sich aus hitzebeständig und kann durch ein Vorziehen des Kühlmantels noch zusätzlich gegen unerwünschte Wärmeeinwirkung geschützt werden. Der Kühlmantel ist in

- 5 -

seiner einfachsten Ausführung lediglich als hitzebeständiger Mantel ausgelegt. Darüber hinaus besitzt der Kühlmantel vorzugsweise eine Wasserkühlung oder Luftkühlung. Im Falle der Luftkühlung ergeben sich weitere Vorteile, wenn die dem Kühlmantel zugeführte Luft zumindest teilweise am Quarzfenster gegen das Quarzfenster wieder austritt. In diesem Fall bewirkt die austretende Kühlluft zugleich eine Kühlung des Quarzfensters und dessen Freibleiben von Staub bzw. Kohlepartikeln. Im übrigen läßt sich einer denkbaren Verschmutzung der Quarzfenster mit der Auslegung der Pyrometer als Quotientenpyrometer Rechnung tragen.

Der ältere Vorschlag geht demnach davon aus, die Wärmestrahlung über das Lichtleiterkabel aus dem Koksofen herauszuleiten und das Pyrometer in jedem Fall so anordnen zu können, daß es nicht mit der Ofenatmosphäre in Berührung kommt.

Nach der vorliegenden Erfindung soll die Wärmestrahlung unmittelbar an der Druckstange in Meßsignale umgewandelt werden, d.h. die von der Optik am Druckkopf aufgenommene Wärmestrahlung wird statt über Lichtleiterkabel direkt am Meßkopf in ein elektrisches Stromsignal transformiert. Dabei wird vorzugsweise ein Vorverstärker zwischengeschaltet. Das Stromsignal wird über flexible Kabel zur Auswertungseinheit geleitet und dort in ein Schreiberdiagramm umgesetzt. Der nahe am Druckkopf der Druckstange installierte Meßkopf besteht in dieser Ausführung aus der Optik, dem Vorverstärker sowie einem Temperaturfühler für die Temperatur im Meßkopf, mit dem bei Überschreiten vorgegebener zulässiger Temperaturgrenzwerte ein Alarmsignal ausgelöst wird. Der gesamte Meßkopf wird ständig mit Wasser gekühlt. Das Wasser wird aus einem Vorratsbehälter mit einer Pumpe abgezogen und nach Durchfluß durch die Meßeinrichtung über Luftkühler im Kreislauf geführt. Die Zuführungs- und Abflußleitungen für das Kühlwasser zur Küh-

- 6 -

lung der elektrischen Leitung sind erfindungsgemäß entweder neben dieser angeordnet oder umschließen die elektrische Leitung in dem der Ofenatmosphäre ausgesetzten Teil.

In der Zeichnung ist ein Ausführungsbeispiel der Erfindung dargestellt. Es zeigen:

Figur 1    eine schematische Darstellung des Quotientenpyrometers nach dem älteren Vorschlag,

Figur 2    ein Blockschaltbild für das Quotientenpyrometer
           gemäß Figur 1 und

Figur 3    eine erfindungsgemäße Optik mit an der Druckstange
           angeordnetem Umformer für die aufgenommene Strahlung.

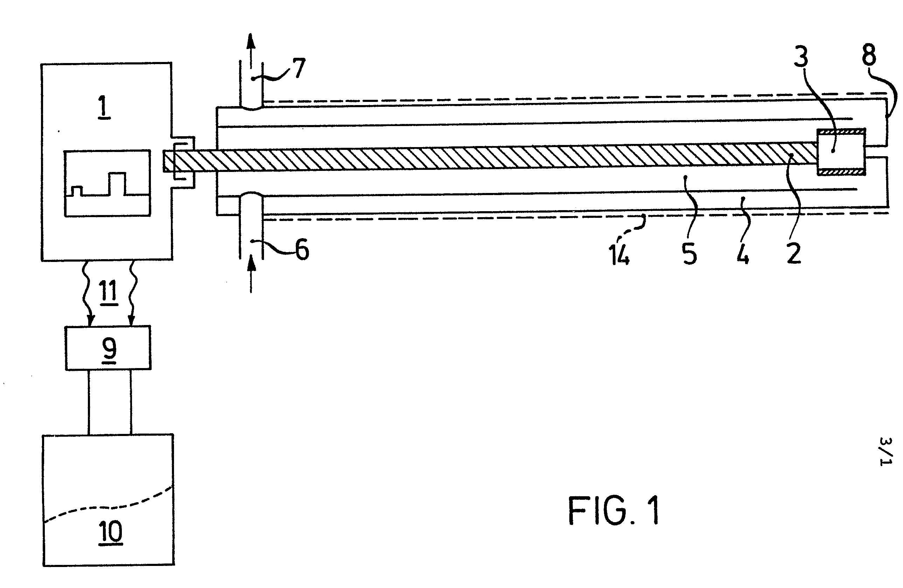

Nach Figur 1 sind an einer nicht dargestellten Druckstange vier Pyrometer mit vorgeschalteter Optik befestigt. Die Verbindung zur Druckstange wird bevorzugt über Distanzstücke mit geringer Wärmeleitfähigkeit hergestellt. Bei Druckstangen in Hohlraumkonstruktion kann das Lichtleiterkabel auch in der Druckstange geführt werden. Jeweils zwei Pyrometer mit vorgeschalteter Optik liegen einander beiderseits an der Druckstange gegenüber und sind mit ihrer Optik voneinander weg und senkrecht von der Druckstange weg gegen die Vertikalebene der Koksofenkammern gerichtet. Jeweils zwei einander gegenüberliegende Paare von Quotientenpyrometern und Optiken sind in vertikalem Abstand voneinander an der Druckstange befestigt, so daß eine nachfolgende Temperaturmessung an den oberen und unteren Enden der Ofenkammerwandflächen stattfindet.

Jedes Pyrometer ist als Quotientenpyrometer 1 ausgelegt. Als Optik besitzt jedes Quotientenpyrometer 1 einen Glas-faserlichtleiter 2 mit vorgeschaltetem Fenster 3, das aus

- 7 -

Quarz oder einem anderen hitzebeständigen, durchsichtigen
Material besteht.

Jedes Quotientenpyrometer ist an dem dem Schild abgewandten Ende der Druckstange befestigt. Der Lichtleiter 2
ist so lang ausgelegt, daß das vordere Ende des Lichtleiters 2 mit dem Fenster 3 dicht hinter dem Schild am
vorderen Ende der Druckstange endet. Der Lichtleiter 2
besteht aus mehreren nebeneinander angeordneten Glasfaserkabeln, die jeweils einen inneren Durchmesser von ca. 1 mm
haben und an denen das Fenster 3 angeklebt ist. Im Ausführungsbeispiel beträgt die Anzahl der Glasfaserkabel fünf.
Statt der fünf Glasfaserkabel mit ca. 1 mm kann auch ein
einzelnes Glasfaserkabel mit 5 mm Innendurchmesser verwendet werden. Die fünf Glasfaserkabel erlauben gegenüber dem
einzelnen, dickeren Glasfaserkabel eine bessere Kühlung.

Die Glasfaserkabel sind flexibel und lassen ohne weiteres
eine Abwinklung des vorderen, am Schild angeordneten Endes
zu. In der Zeichnung ist der Lichtwellenleiter vereinfacht
ohne Abwinklung dargestellt. Die Abwinklung dient dazu,
bei einer nachfolgenden Temperaturmessung an einer Ofenkammerwandfläche die senkrecht von dieser Ofenkammerwandfläche ausgehenden Strahlen zu messen.

Das Quarzfenster läßt eine Temperaturbelastung von 400° C
zu. Es ist 3 bis 10 cm dick und läßt sich mit ausreichender Sicherheit mit Klebern an dem Lichtleiter 2 verkleben;
die Kleber müssen bis zu 300° C temperaturbeständig sein.
Die Lichtleiter sind mit Hytrel ummantelt, das von sich
aus einer Temperaturbelastung bis ca. 150° C standhält,
ohne daß die innenliegenden Glasfaserkabel dadurch beeinträchtigt werden. Darüber hinaus ist ein Kühlmantel aus
VA-Stahl vorgesehen. Der Kühlmantel 4 erstreckt sich über
die ganze Länge, mit der der Lichtleiter 2 beim Drücken
des Kokses gemeinsam mit der Druckstange in die Koksofen-

- 8 -

kammer hineinbewegt wird. Der Kühlmantel 4 besitzt ein
Innenrohr 5 geringeren Durchmessers, so daß zwischen dem
Lichtleiter 2 und dem Innenrohr 5 ein Abstand und zwischen
dem Innenrohr 5 und dem Außenmantel des Kühlmantels 4
ein Abstand besteht, der die Zuführung eines Kühlmediums,
im Ausführungsbeispiel Wasser, durch eine Zuflußöffnung 6
und ein Abfließen durch einen Abfluß 7 ermöglicht. Die
Zuführung 6 mündet an dem Innenrohr und zwingt das Kühlwasser, zunächst an dem Lichtleiter 2 entlangzuströmen,
bis es am Fenster 3 aus dem Innenmantel 5 austreten und
am Außenmantel des Kühlmantels 4 entlang zum Abfluß 7 strömen kann.

Der Kühlmantel 4 ist über das Fenster 3 hinaus, wie mit 8
bezeichnet, vorgezogen und gewährt dadurch eine besondere
Kühlung des Fensters 3.

In einem weiteren, nicht dargestellten Ausführungsbeispiel
ist ein Kühlmantel 4 ohne Innenrohr 5 und Abfluß 7 vorgesehen. Durch den Zufluß 6 wird dann Luft oder ein anderes
gasförmiges Kühlmittel zugeführt, das an dem am Fenster 3
vorgezogenen Ende des Kühlmantels gegen das Fenster durch
nicht dargestellte Austrittsöffnungen austritt. Das bewirkt eine ständige Reinigung des Fensters, d.h. Freihalten des Fensters von Verschmutzung und eine gleichzeitige
Kühlung des Fensters.

Zum Korrosionsschutz ist der Kühlmantel mit einer Binde
aus $ZrO_2$ bzw. Asbest oder einem anderen geeigneten Material
auf Keramikbasis 14 versehen.

Falls erforderlich kann sowohl in einen Mantel Luft für
die Spülung des Fensters und Kühlwasser in einen zweiten
Mantel wie beschrieben aufgegeben werden.

Wegen der rauhen Einsatzbedingungen des Kokereibetriebes

- 9 -

ist das fensterseitige Ende der Optik zusätzlich mit
Seitenblechen gegen seitliche mechanische Einwirkungen
geschützt. Ferner ist der Lichtleiter 2 am meßumformerseitigen Ende, d.h. an dem dem Quotientenpyrometer 1 zugewandten Ende, mit einer optischen Kupplung versehen, so daß
der Lichtleiter bei etwaiger Beschädigung leicht ausgetauscht werden kann. Das Austauschen des Lichtleiters bedingt eine entsprechend lösbare Verbindung im Kühlmantel
und/oder eine lösbare Verbindung des Kühlmantels 4 an der
Druckstange. Das Quotientenpyrometer 1 ist fest an der
Druckstelle montiert und für Meßwellenlängen 0,7 bis 1,4 µ
für Temperaturbereiche zwischen 650 und 1400° C oder 800
und 1800° C ausgelegt. Quotientenpyrometer sind optische
Temperaturmeßgeräte, bei denen die Temperaturmessung auf
zwei eng beieinanderliegenden Wellenlängen erfolgt, aus
deren Meßgrößen der Quotient gebildet wird. Dadurch wird
der durch den Emissionsfaktor bedingte Anzeigefehler erheblich reduziert. Außerdem werden Einflüsse durch Verunreinigungen der Optik, d.h. des Fensters 3, Wasserdampf und
ähnliches weitgehend ausgeschaltet.

Das Quotientenpyrometer 1 wird in Zeitintervallen von einem
Zeitrelais 9 in Gang gesetzt. Die Steuerung des Zeitrelais
erfolgt über die Stromaufnahme beim Druckvorgang, d.h.
Koksdrücken. Die sich aus der intervallmäßigen Temperaturmessung ergebenden Meßwerte werden mit einem Schreiber 10
aufgezeichnet.

Zeitrelais 9 und Schreiber 10 sind ortsfest gegenüber der
bewegbaren Druckstange montiert. Die notwendige Wirkverbindung mit dem Quotientenpyrometer 1 wird durch flexible Leitungen 11 mit nicht dargestellter Aufspulautomatik
erreicht. Der Schreiber 10 ist im Führerstand der nicht
dargestellten Druckmaschine angeordnet.

Bei jedem Druckvorgang erfolgt mit Beginn der Stromaufnahme mit den vom Zeitrelais gegebenen Intervallen eine berührungslose Oberflächentemperaturmessung durch jedes Quotientenpyrometer 1. Die Oberflächentemperaturen der Wände liegen in der Regel zwischen 1000 und 1300° C. Im Ofen selbst herrschen Temperaturen zwischen 900 und 1100° C. Das Pyrometer 1 ist auf die von den Koksofenwänden abgehende Strahlung geeicht. Das geschieht mit Hilfe eines Körpers bekannter Strahlung. Dieser Eichvorgang wird auch als Kalibrieren der Meßvorrichtungen bezeichnet.

Die im Pyrometer 1 gemessenen Temperaturwerte fallen in Form von Spannungswerten an und werden in einem Wandler 12 in Amperewerte umgesetzt. Der Ausgang des Wandlers beträgt zwischen 0 und 20 mA.

Die Ausgangswerte gehen in den Drucker 10, der mit Wechselstrom (220 V, 50 Hz) betrieben wird. In den Stromkreis mit dem Pyrometer sind zwischen Drucker 10 und Wandler 12 das Zeitrelais 9 als Impulsgeber und ein Relais 13 geschaltet. Das Relais 13 wird bei der Stromaufnahme mit Beginn des Druckvorganges geschlossen. Das Relais 13 wird mit Wechselstrom (24 V, 50 Hz) betrieben; mit dem gleichen Strom wird das Zeitrelais 9 betrieben, das als Impulsgeber mit einem Bereich zwischen 0 bis 20 Sekunden arbeitet und im Ausführungsbeispiel auf zwei Sekunden eingestellt ist.

Mit jedem einzelnen Druckvorgang wird durch die erfindungsgemäße Temperaturmessung ein Temperaturprofil aufgenommen, d.h. die Überprüfung der Beheizung erfolgt an der mit der Kokskohle in Berührung kommenden Koksofenkammerfläche und ist infolgedessen sehr viel intensiver als bei üblichen Messungen. Jede Manipulation an jedem einzelnen Ofen wird von der Aufnahme des Temperaturprofiles begleitet. Die Unsicherheiten früherer manueller Messung in der Genauigkeit und in der Folge der Messungen werden ausgeschaltet. Genauigkeit und Schnelligkeit der Messungen sind extrem

- 11 -

hoch. Es wird mit Hilfe des Druckers ein Diagramm ausgeworfen, das der Beheizungsmeister sofort und unmittelbar
für die Überprüfung und Durchführung von Korrekturen verwenden kann. Durch maschinelle Temperaturmessung fallen
eine Reihe manueller Tätigkeiten weg und tritt ein bedeutender Rationalisierungseffekt ein.

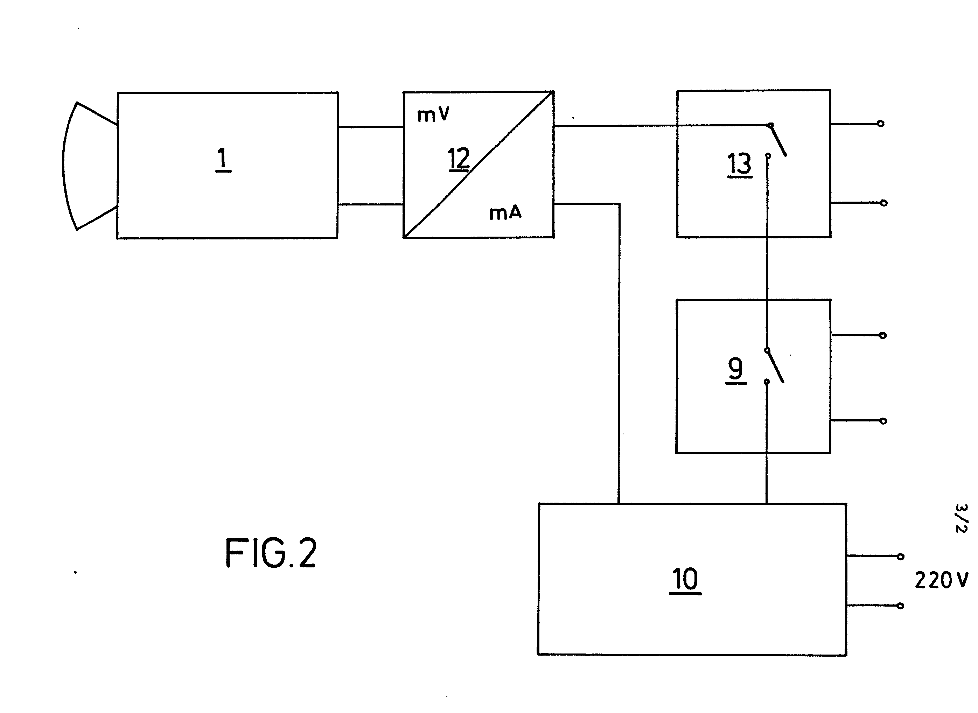

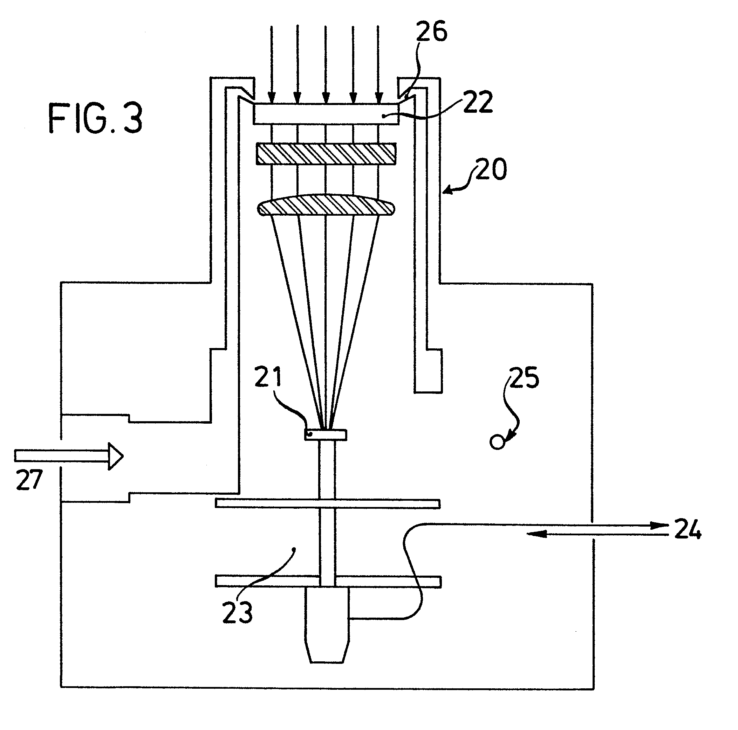

Figur 3 zeigt einen erfindungsgemäßen Meßkopf, der aus
einer Optik 20 und einem Wandler 21 für aufgenommene Wärmestrahlung besteht. Der Meßkopf ist so am Druckkopf der
Druckstange angeordnet, daß sein Fenster 22 der Optik 20
in gleicher Weise Wärmestrahlung wie das Fenster 3 nach
den Figuren 1 und 2 aufnimmt. Die Optik 20 konzentriert die
durch das Fenster 22 fallende Wärmestrahlung auf den Wandler 21, der in beliebiger Weise als Temperaturfühler ausgebildet ist. Das kann in Form eines Quotientenpyrometers
oder auch in einfacher Form eines Thermoelementes der Fall
sein. Der Wandler 21 setzt die aufgenommene Wärmestrahlung
in ein Stromsignal um, das in einem Vorverstärker 23 verstärkt wird, der in dem Meßkopf angeordnet ist. Das so verstärkte Stromsignal wird über ein Kabel 24 einer Signalauswertung zugeführt, die in gleicher Weise wie die nach Figur
2 arbeitet. Zu der nicht dargestellten Auswertungseinheit
gehört u.a. ein Schreiberdiagramm. Der erfindungsgemäße
Meßkopf besitzt ferner einen Temperaturfühler für die Temperatur im Meßkopf, mit dem bei Überschreiten vorgegebener
zulässiger Temperaturgrenzwerte ein Alarm ausgelöst wird.

Der gesamte Meßkopf wird ständig mit Wasser gekühlt. Das
Wasser wird aus einem Vorratsbehälter mit einer Pumpe abgezogen und nach Durchfluß durch den Meßkopf über Luftkühler im Kreislauf geführt. Der Wasserumlauf beträgt etwa
100 l/min. Die Wasserzuführung im Meßkopf ist mit 25 bezeichnet. Die Zuführungsleitung und Abflußleitung für das
Kühlwasser ist im Bereich der Druckstange mit einem korrosionsbeständigen Mantel aus VA-Stahl versehen. Die Zufüh-

- 12 -

rungs- und Abflußleitung für das Kühlwasser wird an der Druckstange entlang zum Meßkopf geführt.

Zusätzlich zur Wasserkühlung ist eine Luftkühlung am Meßkopf vorgesehen. Die Luft tritt aus einer Ringdüse 26 am Fenster 22 aus und kühlt bzw. reinigt zugleich das Fenster 22 von Staub und Verunreinigung. Die Luftleitung ist gemein-sam mit der Wasserzuführungs- und Abflußleitung an der Druckstange verlegt.

Als vierte Leitung ist ein sechsadriges elektrisches Kabel zum Meßkopf geführt, das die Versorgung des Verstärkers 23 zur Aufgabe hat und das Meßsignal sowie das Signal des Temperaturfühlers im Meßkopf aufnimmt. Das Kabel 24 ist flexibel ausgebildet, zugleich gepanzert bzw. mit PTFE (Polytetrafluoräthylen) umhüllt. Die Panzerung dient zur Wärmeisolierung, wenn die Leitung 24 unmittelbar der Wärmestrahlung ausgesetzt ist bzw. zur Isolierung gegen das Kühlwasser, wenn das Kabel 24 innerhalb der Wasserzuführungs- oder Abführungsleitung geführt ist. Das mit PTFE umhüllte Kabel 24 kann Temperaturen bis zu 400 $^\circ$C aufnehmen.

Anstelle der Kühlung mittels des für den Meßkopf bestimmten Kühlwassers kann auch eine Luftkühlung für das Kabel 24 vorgesehen sein. Die Luftkühlung kann in gleicher Weise wie die Wasserkühlung ausgebildet sein.

Bei separater Anordnung der Leitung 24 an der Druckstange ist für die Leitung 24 gleichfalls ein Schutzrohr vorge-sehen.

Die Luftzufuhr am Meßkopf ist mit 27 bezeichnet. Alle Zuführungsleitungen verlieren nach Verlassen der Druckstange entweder ihre Schutzrohre und sind wie die Leitung 24 von sich aus flexibel oder aber zumindest in einem Übergangsbe-

- 13 -

reich zur Druckstange flexibel ausgebildet. Die flexible Ausbildung erlaubt eine Aufwicklung auf Schlauchtrommeln. Vorzugsweise sind Federschlauchtrommeln vorgesehen. Von den Trommeln besteht eine Verbindung zu entsprechenden Versorgungsanlagen.

Die Luft wird einem für die pneumatische Verriegelung der Koksofentüren installierten Kompressor entnommen, sobald ein Magnetventil die Luft nach Beginn der Druckstangenbewegung freigibt.

Mit Beginn der Druckstangenbewegung wird die Auswertungseinheit (Schreiber oder Plotter) in Betrieb gesetzt. Für die Luftentnahme und den Arbeitsbeginn der Auswertungseinheit ist an der Druckstange ein Endschalter installiert, der mit der ersten Bewegung der Druckstange ausgelöst wird. Ein zweiter Endschalter spricht an, sobald die Druckstange unmittelbar vor dem Kokskuchen steht und verlangsamt durch ein Signal die Schreibervorschubgeschwindigkeit, um ein für die Meßgenauigkeit ausreichend gespreiztes Diagramm zu erhalten.

Die Pumpe für den Kühlwasserkreislauf wird vorzugsweise mit Gleichspannung (z.B. 12 V) betrieben, um bei Stromausfall eine Batterieversorgung zu ermöglichen.

Der Meßfleck der Optik beträgt 1 cm, der Arbeitsbereich 0,9 mm Wellenlänge. Distanzänderungen der Optik zur Wandoberfläche, die z.B. durch die Druckstange verursacht werden können, beeinflussen die Meßgenauigkeit nicht.

- 14 -

Patentansprüche

1. Vorrichtung zur Temperaturmessung von Koksofenkammern, gekennzeichnet durch einen an der Druckstange befestigten Meßkopf mit integriertem Wandler (21).

2. Vorrichtung nach Anspruch 1, dadurch gekennzeichnet, daß der Meßkopf mit einer Wasserzuführung (25) und einer Luftzuführung (27) versehen ist.

3. Vorrichtung nach Anspruch 2, dadurch gekennzeichnet, daß die Wasserleitung (25) und/oder Luftleitung (27) zugleich als Kühlung für das zum Meßkopf führende Stromkabel (24) ausgebildet ist.

FIG. 1

0081219

FIG.2

mV
mA

1
12
13
9
10

3/2

220 V

0081219

FIG.3

26

22

20

21

25

27

24

23